# EUROPEAN PATENT APPLICATION

(11) **EP 4 654 598 A1**
(43) Date of publication of application: **26.11.2025**
(21) Application number: 24845732.7
(22) Date of filing: 25.04.2024
(51) Int. Cl.: H04N 23/61, H04N 23/69, H04N 23/695, H04N 23/60, H04N 23/62, G06N 3/045

(54) **ELECTRONIC DEVICE FOR PERFORMING CAPTURING BY PREDICTING CAPTURING COMPOSITION AND MOVING LINE, AND CONTROL METHOD THEREFOR**

(30) Priority: 21.07.2023 KR 20230095188
(71) Applicant: Samsung Electronics Co., Ltd., Suwon-si, Gyeonggi-do 16677 (KR)
(72) Inventor: LEE, Taeyoon, Suwon-si Gyeonggi-do 16677 (KR); MOON, Boseok, Suwon-si Gyeonggi-do 16677 (KR)
(74) Representative: Gulde & Partner
(86) International application number: PCT/KR2024/005605
(87) International publication number: WO 2025/023428

(57) **Abstract**

An electronic device comprises: a camera; a driver; at least one memory that stores one or more instructions; and one or more processors operatively connected to the camera, the driver, and the at least one memory, wherein the one or more instructions, when executed by the one or more processors, may cause the electronic device to: acquire an image captured through the camera; and control the driver so as to change, on the basis of an object included in the image, a capturing method of the camera and an arrangement state of the electronic device.

## Description

### [Technical Field]

The disclosure relates to an electronic apparatus and a controlling method thereof, and more particularly, to an electronic apparatus that performs photographing by predicting a photographic composition and movement and a controlling method thereof.

### [Background Art]

With the development of electronic technology, electronic apparatuses that provide various functions are being developed. In particular, the increase in the number of video platforms has led to an explosion in the demand for video recording using various recording equipment.

However, when individuals shoot videos, there are limitations on an individual's ability to perform photography and editing by themselves. In addition, individuals often lack professional filming knowledge, so they often shoot videos with fixed filming equipment. As a result, the quality of their videos is often low.

On the other hand, while most robots capable of autonomous driving are equipped with cameras, there are no robots that automatically photograph videos.

Therefore, there is a need for a method that allows high-quality shooting while improving user convenience in video shooting.

### [Technical Solution]

Provided is an electronic apparatus that automatically identifies the optimal shooting composition and movement path and perform photography based on the identified shooting composition and movement line, thereby increasing user convenience and a controlling method thereof.

According to an aspect of the disclosure, an electronic apparatus includes: a camera; a driver; at least one memory storing one or more instructions; and one or more processors operably connected to the camera, the driver, and the at least one memory, wherein the one or more instructions, when executed by the one or more processors, cause the electronic apparatus to: obtain an image captured through the camera; and based on an object included in the image, control the driver to change a photographic method of the camera and a placement state of the electronic apparatus.

The one or more instructions, when executed by the one or more processors, may further cause the electronic apparatus to, based on the object included in the image: control the camera to zoom in or zoom out, and control the driver to perform at least one of changing a position of the electronic apparatus or changing a direction of the camera.

The one or more instructions, when executed by the one or more processors, may further cause the electronic apparatus to: obtain a recaptured image through the camera while a position of the electronic apparatus is changed; and based on an object included in the recaptured image, control the driver to adjust the photographic method of the camera and adjust the placement state of the electronic apparatus.

The at least one memory stores a first neural network model and a second neural network model, and the one or more instructions, when executed by the one or more processors, may further cause the electronic apparatus to: obtain a target image corresponding to the object included in the image by inputting the image into the first neural network model, obtain placement information of the electronic apparatus corresponding to the target image by inputting the image and the target image into the second neural network model, obtain a plurality of candidate images corresponding to each of a plurality of pieces of preliminary placement information based on the placement information, and control the driver to change the placement state of the electronic apparatus based on a candidate image corresponding to the target image from among the plurality of candidate images.

The placement information may include information regarding a position of the electronic apparatus and a direction of the camera, and the one or more instructions, when executed by the one or more processors, may further cause the electronic apparatus to: obtain the plurality of pieces of preliminary placement information by applying a plurality of predetermined values to each of the position of the electronic apparatus and the direction of the camera; and obtain the plurality of candidate images by remapping the image based on the plurality of pieces of preliminary placement information.

The at least one memory may store three-dimensional (3D) model information regarding the object; and the one or more instructions, when executed by the one or more processors, may further cause the electronic apparatus to obtain the plurality of candidate images by remapping the image based on the 3D model information and the plurality of pieces of preliminary placement information.

The one or more instructions, when executed by the one or more processors, may further cause the electronic apparatus to: obtain a recaptured image through the camera while a position of the electronic apparatus is changed, obtain an updated target image corresponding to an object included in the recaptured image by inputting the recaptured image into the first neural network model, obtain updated placement information of the electronic apparatus corresponding to the updated target image by inputting the recaptured image and the updated target image into the second neural network mode, and based on the placement state of the electronic apparatus corresponding to the updated placement information, stop an operation of the driver.

The one or more instructions, when executed by the one or more processors, may further cause the electronic apparatus to: obtain a plurality of images through the camera at predetermined time intervals after the operation of the driver is stopped, and based on identifying an image among the plurality of images that may include a changed state of the object, input the identified image into the first neural network model.

The at least one memory stores information regarding a movement range of the electronic apparatus, and the one or more instructions, when executed by the one or more processors, may further cause the electronic apparatus to control the driver to change the placement state of the electronic apparatus within the movement range.

The electronic apparatus may further include a sensor, the movement range may include information regarding an area in which the electronic apparatus is capable of moving, and the information regarding the area in which the electronic apparatus is capable of moving is based on an output of the sensor while the electronic apparatus is moved to a location.

The electronic apparatus may further include including a user interface, and the one or more instructions, when executed by the one or more processors, may further cause the electronic apparatus to control the driver to change the placement state of the electronic apparatus based on a user command received through the user interface.

According to an aspect of the disclosure, a method of controlling an electronic apparatus, includes: obtaining an image captured through a camera included in the electronic apparatus; and based on an object included in the image, changing a photographic method of the camera and a placement state of the electronic apparatus.

The changing may include, based on the object included in the image: causing the camera to zoom in or zoom out; and performing at least one of changing a position of the electronic apparatus or changing a direction of the camera.

The method may further include: based on a position of electronic apparatus changing, obtaining a recaptured image through the camera; and based on an object included in the recaptured image, adjusting the photographic method of the camera and adjusting the placement state of the electronic apparatus.

The changing may include: obtaining a target image corresponding to the object included in the image by inputting the image into a first neural network model; obtaining placement information of the electronic apparatus corresponding to the target image by inputting the image and the target image into a second neural network model; obtaining a plurality of candidate images corresponding to each of a plurality of pieces of preliminary placement information based on the placement information; and changing the placement state of the electronic apparatus based on a candidate image corresponding to the target image from among the plurality of candidate images.

### [Brief Description of Drawings]

The above and other aspects, features, and advantages of certain embodiments of the present disclosure will be more apparent from the following description taken in conjunction with the accompanying drawings, in which:
FIG. 1 is a block diagram provided to explain a hardware configuration of an electronic apparatus according to an embodiment;
FIG. 2 is a block diagram provided to explain a software configuration of an electronic apparatus according to an embodiment;
FIG. 3 is a block diagram illustrating detailed configuration of an electronic apparatus according to an embodiment;
FIG. 4 is a diagram provided to explain a method of performing photography while changing a composition according to an embodiment;
FIG. 5 is a diagram provided to explain a movement range of an electronic apparatus according to an embodiment;
FIG. 6 is a diagram provided to explain 3D model information according to an embodiment;
FIGS. 7 and 8 are a flowchart and a block diagram, respectively, provided to explain a method of photography according to an embodiment;
FIGS. 9 and 10 are diagrams provided to explain examples of utilization according to various embodiments; and
FIG. 11 is a flowchart provided to explain a method of controlling an electronic apparatus according to an embodiment.

### [Detailed Description]

The embodiments of the present disclosure may be diversely modified. Accordingly, specific example embodiments are illustrated in the drawings and are described in detail in the detailed description. However, it is to be understood that the present disclosure is not limited to a specific example embodiment, but includes all modifications, equivalents, and substitutions without departing from the scope and spirit of the present disclosure. Also, well-known functions or constructions are not described in detail since they would obscure the disclosure with unnecessary detail.

Hereinafter, example embodiments of the present disclosure will be described in greater detail with reference to the accompanying drawings.

General terms that are currently widely used are selected as terms used in embodiments of the disclosure in consideration of their functions in the disclosure. However, these terms may be changed depending on the intention of those skilled in the art or a judicial precedent, the emergence of a new technique, and the like. In addition, in a specific case, terms arbitrarily chosen by an applicant may exist, and in this case, the meanings of such terms are mentioned in detail in corresponding descriptions of the disclosure. Therefore, the terms used in the disclosure need to be defined on the basis of the meanings of the terms and the contents throughout the disclosure rather than simple names of the terms.

In the specification, an expression "have," "may have," "include," "may include," or the like, indicates the existence of a corresponding feature (for example, a numerical value, a function, an operation or a component such as a part), and does not exclude the existence of an additional feature.

The expressions "at least one of A and B" and "at least one of A or B" should be understood to indicate one of "A", "B", or "both of A and B."

Expressions "first," "second," and the like, used in the specification may qualify various components regardless of the sequence or importance of the components. The expressions are used only to distinguish one component from another component, and does not limit the corresponding components.

A term of a singular number used herein is intended to include its plural number unless explicitly indicated otherwise. It is to be understood that a term "include," "formed of," or the like used in this application specifies the existence of features, numerals, steps, operations, components, parts, or combinations thereof, which is mentioned in the specification, and does not preclude the existence or addition of one or more other features, numerals, steps, operations, components, parts, or combinations thereof.

In this disclosure, the term "user" may refer to a person using an electronic apparatus or to a device (e.g., artificial intelligence electronic device) using an electronic apparatus.

Hereinafter, various embodiments of the present disclosure will be described in greater detail with reference to the accompanying drawings.

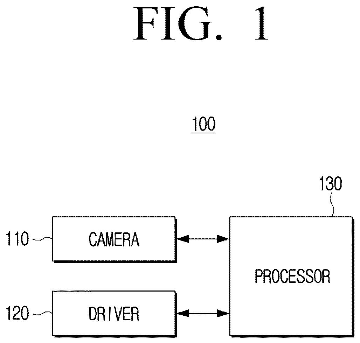

FIG. 1 is a block diagram provided to explain a hardware configuration of an electronic apparatus 100 according to an embodiment.

The electronic apparatus 100 may be an apparatus for capturing an image. For example, the electronic apparatus 100 may include movement means and shooting means, and may be an apparatus which controls the movement means to move the position of the electronic apparatus 100 and shoots images through the shooting means. Here, the movement means and the shooting means may be implemented as separate devices, and the electronic apparatus 100 may be implemented as a combination of the movement means and the shooting means. However, the electronic apparatus 100 may be any apparatus comprising movement means and shooting means.

Referring to FIG. 1, the electronic apparatus 100 may include a camera 110, a driver 120, and a processor 130. However, the electronic apparatus 100 is not limited thereto, and the electronic apparatus 100 may be implemented in a form that excludes some configurations. For example, the electronic apparatus 100 may include only the camera 110 and the processor 130, coupled to a separately implemented driver and utilized in a mobile form. Alternatively, the electronic apparatus 100 may include only the driver 120 and the processor 130, and may be coupled to a separately implemented photographing device to perform photography.

The camera 110 may be configured to capture still images or moving images. The camera 110 may capture still images at a specific point in time, but may also capture still images continuously.

The camera 110 may include a lens, a shutter, an aperture, a solid-state acquisition element, an analog front end (AFE), and a timing generator (TG). The shutter controls the time that light reflected from a subject enters the camera 110, and the aperture controls the amount of light entering the lens by mechanically increasing or decreasing the size of the opening through which light enters. The solid-state acquisition element outputs a photoelectric charge as an electrical signal when light reflected from a subject is accumulated. The TG outputs a timing signal to read out the pixel data of the solid-state acquisition element, and the AFE samples and digitizes the electrical signal output from the solid-state acquisition element.

The driver 120 may be configured to move the position of the electronic apparatus 100 under the control of the processor 130, and may include wheels, motors, transmission gears, and the like. However, the driver 120 is not limited thereto, and the driver 120 may be of any configuration capable of moving the position of the electronic apparatus 100.

The processor 130 may be configured to control the overall operations of the electronic apparatus 100. Specifically, the processor 130 may be connected to each configuration of the electronic apparatus 100 to control of the operations of the electronic apparatus 100. For example, the processor 130 may be connected to configurations such as the camera 110, the driver 120, the memory, and the like to control the operations of the electronic apparatus 100.

At least one processor 130 may include one or more or a CPU, a Graphics Processing Unit (GPU), an Accelerated Processing Unit (APU), a Many Integrated Core (MIC), a Neural Processing Unit (NPU), a hardware accelerator, or a machine learning accelerator. At least one processor 130 may control one or any combination of other components of the electronic apparatus 100, and may perform a communication-related operation or data processing. At least one processor 130 may execute one or more programs or instructions stored in the memory. For example, at least one processor 130 may perform a method according to an embodiment by executing one or more instructions stored in the memory.

When the method according to an embodiment includes a plurality of operations, the plurality of operations may be performed by one processor or by a plurality of processors. For example, when the first operation, the second operation and the third operation are performed by the method according to an embodiment, all of the first operation, the second operation and the third operation may be performed by the first processor, or the first operation and the second operation may be performed by the first processor (e.g., a general-purpose processor) and the third operation may be performed by the second processor (e.g., an AI-only processor).

At least one processor 130 may be implemented as a single core processor including one core or one or more multi-core processors including a plurality of cores (e.g., homogeneous multi-core or heterogeneous multi-core). When the at least one processor 130 is implemented as a multi-core processor, each of the plurality of cores included in the multi-core processor may include an internal memory such as a cache memory and an on-chip memory, and a common cache shared by the plurality of cores may be included in the multi-core processor. In addition, each of the plurality of cores (or some of the plurality of cores) included in the multi-core processor may independently read and perform program instructions for implementing the method according to an embodiment, and all of the plurality of cores (or some of them) may be linked to read and perform program instructions for implementing the method according to an embodiment.

When the method according to an embodiment includes a plurality of operations, the plurality of operations may be performed by one core among the plurality of cores included in the multi-core processor, or may be performed by a plurality of cores. For example, when the first operation, the second operation and the third operation are performed by the method according to an embodiment, all of the first operation, the second operation and the third operation may be performed by the first core included in the multi-core processor, or the first operation and the second operation may be performed by the first core and the third operation may be performed by the second core included in the multi-core processor.

In one or more embodiments of the present disclosure, at least one processor 130 may be a system-on-chip (SoC) where one or more processors and other electronic components are integrated, a single-core processor, a multi-core processor, or a core included in the single-core processor or the multi-core processor. Here, the core may be implemented as CPU, GPU, APU, MIC, NPU, hardware accelerator, machine learning accelerator, or the like, but the disclosure is not limited thereto. However, hereinafter, for convenience of explanation, the operation of the electronic apparatus 100 will be described using the term "processor 130".

The processor 130 may obtain an image captured through the camera 110, and may control the camera 110 and the driver 120 to change the photographic method of the camera 110 and change the placement state of the electronic apparatus 100 (i.e., reposition the electronic apparatus 100) based on an object included in the image.

For example, the processor 130 may control the driver 120 to perform zooming in or zooming out of the camera 110 based on an object included in the image and perform one of moving the position of the electronic apparatus 100 or changing the direction of the camera 110. Alternatively, the processor 130 may control the camera 110 or the driver 120 to change the photographic method of the camera 110 or to change the placement state of the electronic apparatus 100.

However, the present disclosure is not limited thereto, and the processor 130 may change the photographic method of the camera 110 in various ways. For example, the processor 130 may change the photographic method of the camera 110 by changing at least one of an aperture value, focus, angle of view, white balance, image size, flash, filter, or image stabilization.

Through the above operations, the processor 130 may photograph an object in a shooting composition optimized for the object.

The processor 130 may obtain a recaptured image by recapturing the image through the camera 110 while moving the position of the electronic apparatus 100, and may control the driver 120 to adjust the photographic method of the camera 110 and adjust the placement state of the electronic apparatus 100 based on the objects included in the recaptured images. In other words, the processor 130 may change the shooting angle of the object, the distance of the electronic apparatus 100 from the object, or the like as at least one of the photographic method or the placement state changes, and may control the driver 120 to reposition the camera 110 for a new shooting composition optimized for the changed object to adjust the photographic method of the camera 110 and adjust the placement state of the electronic apparatus 100. Alternatively, even if the photographic method and placement state do not change, the processor 130 may change the shooting angle of the object, the distance of the electronic apparatus 100 from the object, or the like due to the movement of the object, and may control the driver 120 to reposition the camera to obtain a new shooting composition optimized for the changed object to adjust the photographic method of the camera 110 and adjust the placement state of the electronic apparatus 100.

As described above, the processor 130 may change the photographic method and change the placement state at predetermined time intervals, and may reduce the predetermined time intervals to further improve the shooting quality.

In addition, the processor 130 may change the predetermined time intervals based on a degree of change in the object photographed at the predetermined time intervals. For example, the processor 130, when the position of the object in a first image and a second image taken one second after taking the first image changes by more than a predetermined distance or the size of the object changes by more than a threshold percentage, capture a third image 0.3 seconds after taking the second image.

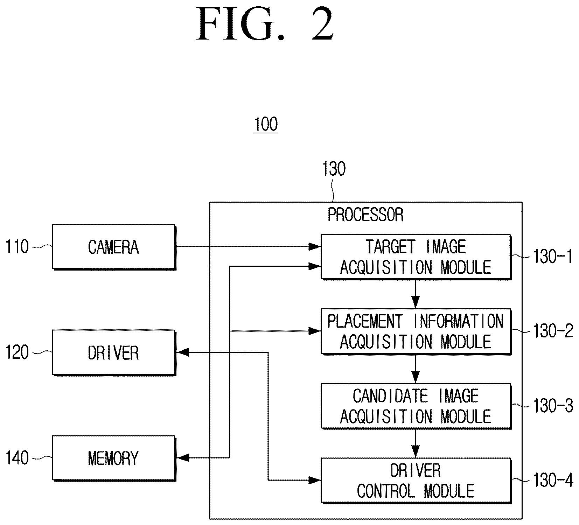

The above operation of the processor 130 will be described in more detail with reference to the various modules of FIG. 2.

FIG. 2 is a block diagram provided to explain a software configuration of the electronic apparatus 100 according to an embodiment. In FIG. 2, the position of a plurality of modules within processor 130 is intended to indicate a state in which the plurality of modules are loaded (or executed) by and operated on the processor 130, and the plurality of modules may be pre-stored in the memory 140.

The memory 140 may refer to hardware that stores information, such as data, in electrical or magnetic form so as to be accessed by the processor 130 or the like. To this end, the memory 140 may be implemented as at least one of the following hardware: non-volatile memory, volatile memory, flash memory, hard disk drive (HDD) or solid state drive (SSD), RAM, ROM, etc.

The memory 140 may store at least one instruction required for operation of the electronic apparatus 100 or the processor 130. Here, the instructions are units of code that direct the operation of the electronic apparatus 100 or the processor 130, and may be written in a machine language, which is a language that a computer can understand. Alternatively, the memory 140 may store a plurality of instructions, as an instruction set, that perform a specific task of the electronic apparatus 100 or the processor 130.

The memory 140 may store data, which is information in bits or bytes that can represent characters, numbers, images, and the like. For example, the memory 140 may store a target image acquisition module 130-1, a placement information acquisition module 130-2, a candidate image acquisition module 130-3, and a driver control module 130-4, along with other modules such as a neural network module, a movement range module, 3D model information, and the like.

The memory 140 may be accessed by the processor 130, and instructions, sets of instructions, or data may be read/written/modified/deleted/updated by the processor 130.

The memory 140 may store a first neural network model and a second neural network model. Here, the first neural network model may be a model that has learned features of the data through deep reinforcement learning (DRL). For example, the first neural network model may be a model that has learned a plurality of sample videos to learn objects and shooting compositions in each video, and when an obtained image is input, it may output a target image according to the optimal shooting composition.

However, the present disclosure is not limited thereto, and the first neural network model may also be a model that has been learned a plurality of sample videos to learn a plurality of objects and shooting compositions in each video.

The second neural network model may be implemented as a recurrent neural network (RNN), which can output a pose for the shooting composition corresponding to the target image when the obtained image and the target image are input.

The memory 140 may store 3D model information regarding an object. For example, 3D model information for an object that is the subject of photography may be stored in the memory 140 by the user. Alternatively, the processor 130 may obtain 3D model information regarding an object from a plurality of images taken during movement of the electronic apparatus 100 and store the obtained 3D model information in the memory 140.

The memory 140 may store information regarding a movement range in which the electronic apparatus 100 is capable of moving. For example, information regarding a movement range in which the electronic apparatus 100 is capable of moving may be stored in the memory 140 by the user. Alternatively, the processor 130 may obtain information regarding the movement range in which the electronic apparatus 100 is capable of moving in the course of moving the electronic apparatus 100 and store the information regarding the movement range in which the electronic apparatus 100 is capable of moving in the memory 140.

The processor 130 may control the overall operation of the electronic apparatus 100 by executing modules or instructions stored in the memory 140. Specifically, the processor 130 may read and interpret the modules or instructions and determine a sequence for data processing, and may control the operations of other configurations by sending control signals to control the operations of other configurations, such as the memory 140, accordingly.

The processor 130 may obtain a target image of a composition corresponding to an object included in an obtained image by inputting the obtained image to the first neural network model by executing the target image acquisition module 130-1. The target image may be an image that is expected to be captured in an optimal composition based on the object included in the obtained image.

The processor 130 may obtain placement information of the electronic apparatus 100 corresponding to the target image by inputting the obtained image and the target image to the second neural network model by executing the placement information acquisition module 130-2. For example, the placement information may include information regarding at least one of a position of the electronic apparatus 100 or a shooting direction of the camera 110. For example, the placement information may include information regarding a position of the electronic apparatus 100 that is capable of capturing an image, such as a target image, and a shooting direction of the camera 110. As another example, the placement information may include information regarding a change in the position of the electronic apparatus 100 capable of capturing an image, such as a target image, and a change in the shooting direction of the camera 110 based on a comparison of the captured image and the target image.

The processor 130 may obtain a plurality of candidate images, each corresponding to a plurality of preliminary placement information, based on the placement information by executing the candidate image acquisition module 130-3. For example, the processor 130 may obtain the plurality of preliminary placement information by applying a plurality of predetermined values to a position of the electronic apparatus 100 and a shooting direction of the camera 110, respectively, and may obtain the plurality of candidate images by remapping the obtained image based on the plurality of preliminary placement information. For example, by applying a plurality of predetermined values to the position A of the electronic apparatus 100 and the shooting direction B of the camera 110, respectively, a plurality of preliminary placement information such as (A, B), (A, B+1), (A+1, B), (A+1, B+1), (A, B-1), (A-1, B), (A-1, B-1), (A-1, B-1), (A-1, B+1), and (A-1, B+1) may be obtained, and nine candidate images may be obtained by remapping the obtained image based on the plurality of preliminary placement information.

The processor 130 may remap the obtained image based on the 3D model information regarding the object stored in the memory 140 and the plurality of preliminary placement information to obtain a plurality of candidate images. In this case, more sophisticated candidate images may be obtained.

The processor 130 may control the driver 120 to change the placement state of the electronic apparatus 100 based on a candidate image corresponding to the target image from among the plurality of candidate images by executing the driver control module 130-4. In the example described above, the processor 130 may change the placement state of the electronic apparatus 100 based on the candidate image that most closely resembles the target image from among the nine candidate images. For example, if the candidate image based on (A+1, B+1) of the nine candidate images is the most similar to the target image, the processor 130 may change the position of the electronic apparatus 100 based on A+1 and change the shooting direction of the camera 110 based on B+1.

The processor 130 may obtain a recaptured image that is retaken through the camera 110 while moving the position of the electronic apparatus 100, input the recaptured image to the first neural network model to obtain an updated target image of an optimal composition corresponding to an object included in the recaptured image, input the recaptured image and the updated target image to the second neural network model to obtain updated placement information of the electronic apparatus 100 corresponding to the target image, and stop the operation of the driver 120 when the placement state of the electronic apparatus 100 and the updated placement information correspond. In other words, the processor 130 may repeat the operation of obtaining the obtained image, the operation of obtaining the target image, the operation of obtaining the placement information, the operation of obtaining a plurality of candidate images, and the operation of changing the placement state based on the candidate images even while moving the position of the electronic apparatus 100, and these operations enable a real-time change of the optimal composition. Subsequently, when the placement state and the updated placement information correspond to each other, the processor 130 may identify the photography of the optimal composition and stop the operation of the driver 120.

After stopping the operation of the driver 120, the processor 130 may obtain an image through the camera 110 at predetermined time intervals, and when an image in which the state of the object has changed is identified in the image obtained at the predetermined time intervals, the processor 130 may input the identified image into the first neural network model. In other words, even while performing photography in an optimal composition, the optimal composition may change due to a change in the shooting angle of the object, the distance between the electronic apparatus 100 and the object, etc. due to a movement of the object, so the processor 130 may maintain the operation of obtaining the shooting image, the operation of obtaining the target image, the operation of obtaining the placement information, the operation of obtaining a plurality of candidate images, and the operation of comparing the placement state of the electronic apparatus 100 and the placement information corresponding to the candidate images even after the operation of the driver 120 is stopped.

The processor 130 may control the driver 120 to change the placement state of the electronic apparatus 100 within the movement range based on information regarding the movement range in which the electronic apparatus 100 is capable of moving, which is stored in the memory 140.

Here, the electronic apparatus 100 further includes a sensor, and the movement range may include information regarding an area in which the electronic apparatus 100 can move, which is detected by the sensor while the electronic apparatus 100 is moved to a random location.

The electronic apparatus 100 further includes a user interface, and the processor 130 may control the driver 120 to change the placement of the electronic apparatus 100 based on a user command received through the user interface.

Functions related to artificial intelligence according an embodiment may be operable through processor 130 and the memory 140.

The processor 130 may consist of one processor or a plurality of processors. Here, one processor or a plurality of processors may include a general-purpose processor, such as a CPU, an application processor (AP), a digital signal processor (DSP), etc., a graphic-dedicated processor, such as a GPU, a vision processing unit (VPU), etc., or an AI-dedicated processor, such as a neural processing unit (NPU).

One processor or a plurality of processors may process input data according to a predefined operation rule or an AI model stored in the memory 140. Alternatively, when the one processor or a plurality of processors correspond to an AI-dedicated processor, the AI-dedicated processor may be designed to have a hardware structure specialized for processing a specific AI model. The predefined operation rule or the AI model may be made through training.

Herein, when the AI model is made through training, it may mean that a basic AI model is trained based on a learning algorithm by using multiple training data, such that the predefined operation rule or AI model set to execute desired features (or desired purpose) is made. Such learning may be performed by a device on which AI according to the disclosure is implemented, or by a separate server and/or system. Examples of a learning algorithm may include, but are not limited to, supervised learning, unsupervised learning, semi-supervised learning, or reinforcement learning.

An artificial intelligence model may consist of a plurality of neural network layers. Each of the plurality of neural network layers has a plurality of weight values, and performs a neural network computation through computation between the results of the plurality of weights. The plurality of weights of the plurality of neural network layers may be optimized by the learning results of the artificial intelligence model. For example, the plurality of weights may be updated to reduce or minimize the loss value or the cost value obtained by the artificial intelligence model during the learning process.

Artificial neural networks may include deep neural networks (DNNs), such as, but not limited to, convolutional neural networks (CNNs), deep neural networks (DNNs), recurrent neural networks (RNNs), restricted Boltzmann machines (RBMs), deep belief networks (DBNs), bidirectional recurrent deep neural networks (BRDNNs), generative adversarial networks (GANs), or deep Q-Networks.

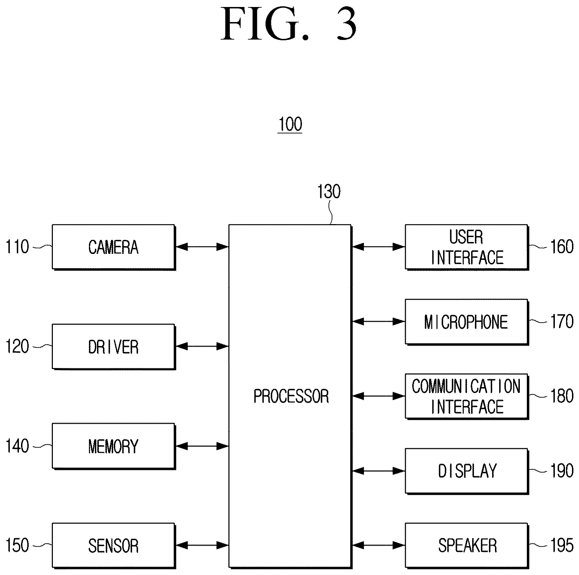

FIG. 3 is a block diagram illustrating a detailed configuration of the electronic apparatus 100 according to an embodiment.

The electronic apparatus 100 may include the camera 110, the driver 120, the processor 130, and the memory 140. Referring to FIG. 3, the electronic apparatus 100 may further include a sensor 150, a user interface 160, a microphone 170, a communication interface 180, a display 190, and a speaker 195. Some of the components shown in FIG. 3 overlap with those shown in FIGS. 1 and 2, so further description will be omitted.

The sensor 150 may include a cliff sensor, a time-of-flight (ToF) sensor, or the like. The cliff sensor may be a sensor that outputs light toward the floor and receives light reflected from the floor. The ToF sensor may be a three-dimensional sensor that recognizes three-dimensionality, spatial information, and movement of objects by calculating the distance in time that that light projected to an object through infrared waves bounces back. The processor 130 may measure the distance from the floor based on the information received from the sensor 150. In addition, the processor 130 may identify a drop-off when no reflected light is received, and may identify the boundaries of a movable area of the electronic apparatus 100.

The user interface 160 may be implemented as a button, a touch pad, a mouse, a keyboard, etc., or may be implemented as a touch screen that can also perform a display function and a manipulation input function. Here, the button may be various types of buttons such as mechanical buttons, touch pads, wheels, etc. formed on any area of the exterior of the main body of the electronic apparatus 100, such as the front, side, or back.

The microphone 170 is configured to receive sound and convert it into an audio signal. The microphone 170 is electrically coupled to the processor 130 and may receive sound under the control of the processor 130.

For example, the microphone 170 may be formed as an integral part of the top, front, side, etc. of the electronic apparatus 100. Alternatively, the microphone 170 may be provided on a remote controller or the like that is separate from the electronic apparatus 100. In this case, the remote controller may receive sound through the microphone 170 and provide the received sound to the electronic apparatus 100.

The microphone 170 may include various configurations, such as a microphone to collect sound in analog form, an amplifier circuit to amplify the collected sound, an A/D conversion circuit to sample and convert the amplified sound to a digital signal, a filter circuit to remove noise components from the converted digital signal, and the like.

The microphone 170 may be implemented in the form of a sound sensor, and may be configured in any way that is capable of collecting sound.

The communication interface 180 is configured to perform communication with various types of external devices according to various types of communication methods. For example, the electronic apparatus 100 may perform communication with a content server or a user terminal device through the communication interface 180.

The communication interface 180 may include a Wi-Fi module, a Bluetooth module, an infrared communication module, a wireless communication module, etc. Here, each communication module may be implemented in the form of at least one hardware chip.

The Wi-Fi module and the Bluetooth module perform communication using a Wi-Fi method and a Bluetooth method, respectively. When using a Wi-Fi module or a Bluetooth module, various connection information such as SSID and session key are first transmitted and received, and various information can be transmitted and received after establishing communication connection using this. The infrared communication module performs communication according to an infrared Data Association (IrDA) communication technology which transmits data wirelessly over a short distance using infrared rays between optical light and millimeter waves.

In addition to the above-described communication methods, the wireless communication module includes at least one communication chip that performs communication according to various wireless communication standards, such as zigbee, 3rd Generation (3G), 3rd Generation Partnership Project (3GPP), Long Term Evolution (LTE), LTE advanced (LTE-A), 4th Generation (4G), 5th Generation (5G), etc.

Alternatively, the communication interface 180 may include a wired communication interface such as HDMI, DP, Thunderbolt, USB, RGB, D-SUB, DVI, etc.

In addition, the communication interface 180 may include at least one of a Local Area Network (LAN) module, an Ethernet module or a wired communication module that performs communication using a pair cable, a coaxial cable or an optical fiber cable.

The display 190 is configured to display an image, and may be implemented as various types of displays such as a Liquid Crystal Display (LCD), an Organic Light Emitting Diodes (OLED) display, a Plasma Display Panel (PDP), etc. The display 190 may also include a driving circuit, a backlight unit, etc. that can be implemented in the form of a-si TFT, low temperature poly silicon (LTPS) TFT, organic TFT (OTFT), etc. The display 190 may be implemented as a touch screen combined with a touch sensor, a flexible display, a 3D display, etc.

The speaker 195 is configured to output not only various audio data processed by the processor 130 but also various notification sounds, voice messages, etc.

As described above, the electronic apparatus 100 may perform automatic image photography in an optimal composition in accordance with an object, and user convenience may be improved.

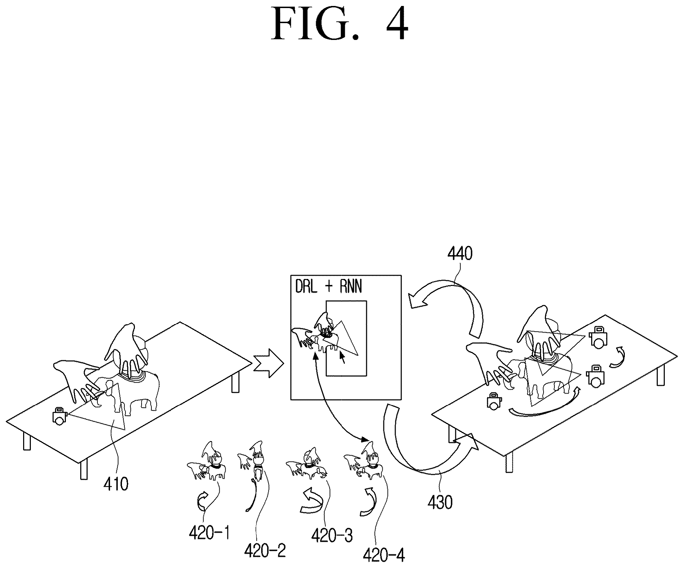

Hereinafter, the operation of the electronic apparatus 100 will be described in greater detail with reference to FIGS. 4 to 10. For convenience of explanation, individual embodiments will be described in FIGS. 4 to 10. However, the individual embodiments of FIGS. 4 to 10 may be implemented in any combination.

FIG. 4 is a diagram provided to explain a method of performing photography while changing a composition according to an embodiment.

The processor 130 may obtain an image by performing photography at an angle of view 410 from the left side of the object, as shown on the left side of FIG. 4.

The processor 130 may obtain a target image of a composition corresponding to an object included in the obtained image by inputting the obtained image into the first neural network model. For example, the processor 130 may obtain a target image when the object is photographed in a right-to-left orientation, as shown in the upper center of FIG. 4. Here, the target image may be an image that would have been expected to be captured in an optimal shooting composition based on the object included in the obtained image.

The processor 130 may obtain placement information of the electronic apparatus 100 corresponding to the target image by inputting the obtained image and the target image into the second neural network model, and may obtain a plurality of candidate images 420-1, 420-2, 420-3, 420-4, each corresponding to a plurality of preliminary placement information based on the placement information, as shown in the bottom center of FIG. 4.

The processor 130 may control the camera 110 and the driver 120 to change the photographic method of the camera 110 and change the placement state of the electronic apparatus 100 based on the candidate image that most closely resembles the target image from among the plurality of candidate images 420-1, 420-2, 420-3, 420-4. For example, the processor 130 may control the camera 110 and the driver 120 to change the photographic method of the camera 110 and change the placement state of the electronic apparatus 100 based on the candidate image 420-4 that most closely resembles the target image from among the plurality of candidate images 420-1, 420-2, 420-3, 420-4.

Through the above-described operations, the processor 130 may control the camera 110 and the driver 120 to change the photographic method of the camera 110 and change the placement state of the electronic apparatus 100, as shown in 430 of FIG. 4.

Subsequently, the processor 130 may obtain an updated image, an updated target image, updated placement information, a plurality of updated candidate images, and adjust the placement state based on the plurality of updated candidate images, as shown in 440 of FIG. 4, thereby performing operations as shown in 430 of FIG. 4.

The processor 130 may repeat the operation of 440 and the operation of 430 at predetermined time intervals, thereby capturing images in the optimal composition in real time.

While FIG. 4 is described with reference to a single object, the processor 130 may operate in consideration of a plurality of objects. For example, the processor 130 may consider not only the elephant object but also the user's hand in FIG. 4 to control the camera 110 and the driver 120 to change the photographic method of the camera 110 and change the placement state of the electronic apparatus 100.

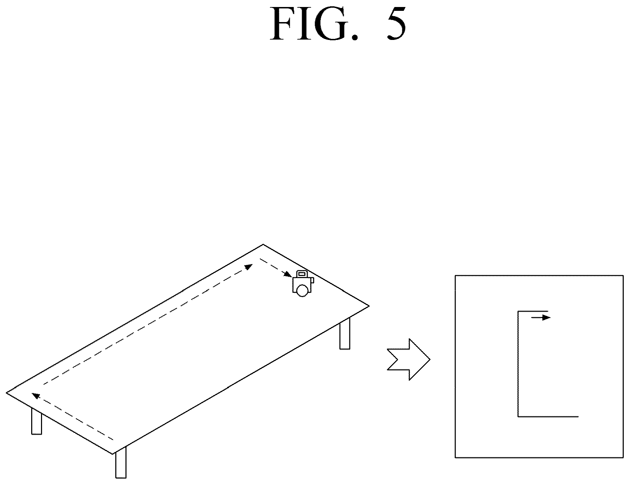

FIG. 5 is a diagram provided to explain a movement range of the electronic apparatus 100 according to an embodiment.

As shown in FIG. 5, the processor 130 may obtain information regarding an area in which the electronic apparatus 100 is capable of moving, which is detected through the sensor 150 while the electronic apparatus 100 is moved to a random location, and store the information regarding the final movable area in the memory 140 as the movement range.

Subsequently, the processor 130 may only move within the movement range while performing the operation shown in FIG. 4. In the example of FIG. 4, if the processor 130 identifies that movement according to the candidate image 420-4, which is the most similar to the target image from among the plurality of candidate images 420-1, 420-2, 420-3, 420-4, is outside the movement range, the processor 130 may control the camera 110 and the driver 120 to change the photographic method of the camera 110 and change the placement state of the electronic apparatus 100 based on the candidate image that is the second most similar to the target image from among the plurality of candidate images 420-1, 420-2, 420-3, 420-4.

However, the present disclosure is not limited thereto, and the memory 140 may not store any information regarding the movement range. In this case, the processor 130 may operate in a manner such that, in performing the operation shown in FIG. 4, the processor 130 identifies through the sensor 150 whether movement is possible and, if it is identified that movement is not possible, changes the candidate image described above.

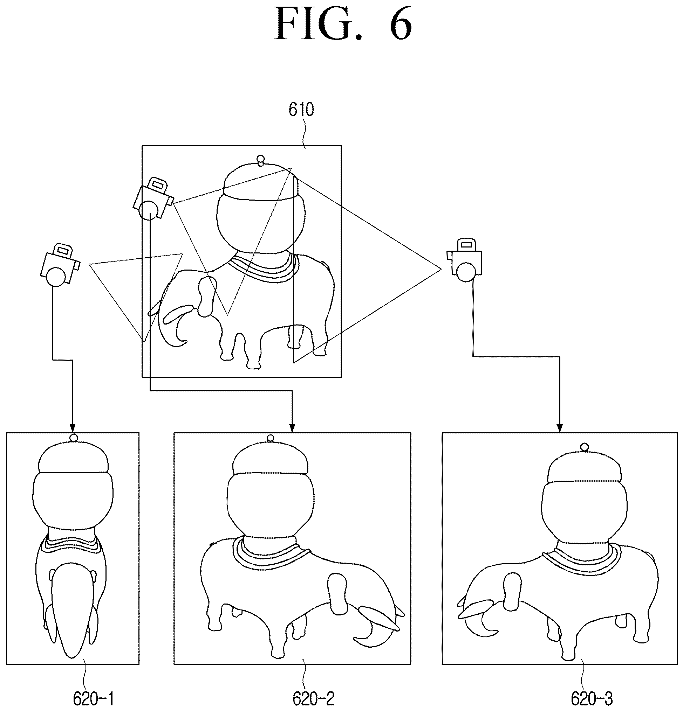

FIG. 6 is a diagram provided to explain 3D model information according to an embodiment.

For more sophisticated operations, the user may also utilize the electronic apparatus 100 to obtain 3D model information regarding an object. For example, when receiving a user command to obtain 3D model information regarding an object, the processor 130 may move around an object 610 to capture a plurality of images 620-1, 620-2, and 620-3, as shown in FIG. 6, and obtain 3D model information regarding the object based on the plurality of images 620-1, 620-2, and 620-3. However, the present disclosure is not limited thereto, and the user may provide the 3D model information directly to the electronic apparatus 100.

The processor 130 may identify an object included in the obtained image, and may identify whether the identified object corresponds to 3D model information stored in the memory 140. If the identified object corresponds to the 3D model information, the processor 130 may obtain a plurality of candidate images by remapping the obtained image based on the 3D model information and a plurality of preliminary placement information.

The above operation allows photography in a more sophisticated composition.

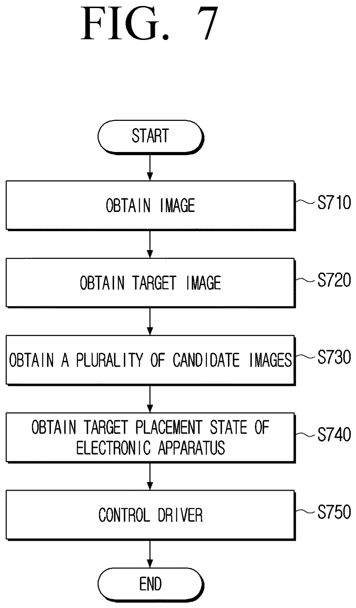

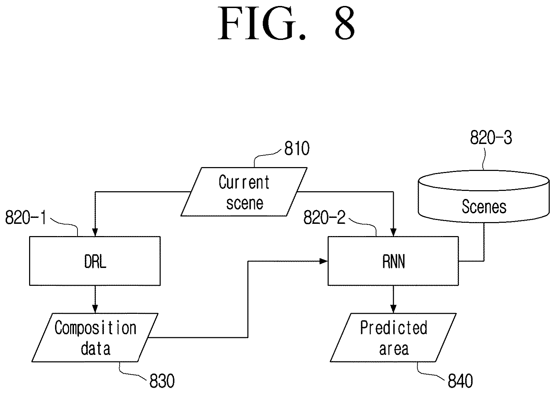

FIGS. 7 and 8 are views provided to explain a photographic method according to an embodiment.

Firstly, the processor 130 may obtain an image (S710).

The processor 130 may obtain a target image (S720) based on the obtained image. For example, the processor 130 may obtain the target image (composition, data, 830) by inputting the obtained image (current scene 810) to the first neural network model (DRL 820-1), as shown in FIG. 8. Subsequently, the processor 130 may input the obtained image and the target image into the second neural network model (RNN 820-2) to obtain placement information (predicted area 840) of the electronic apparatus 100 corresponding to the target image.

Based on the placement information, the processor 130 may obtain a plurality of candidate images, each corresponding to a plurality of preliminary placement information (S730).

The processor 130 may obtain a target placement state of the electronic apparatus 100 based on the candidate image that most closely resembles the target image from among the plurality of candidate images (S740), and may control the driver 120 to change the placement state of the electronic apparatus 100 based on the target placement state (S750).

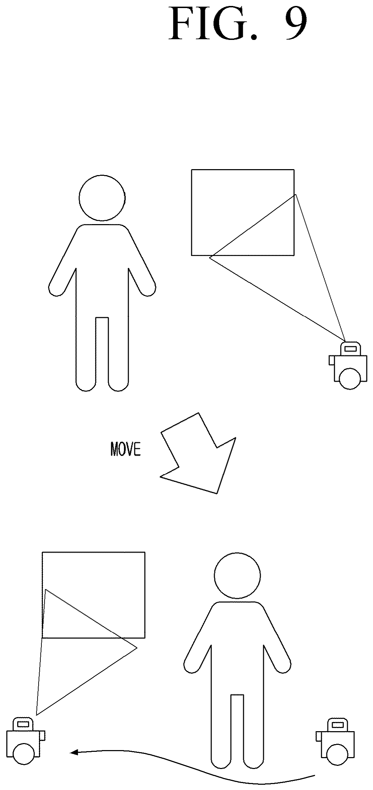

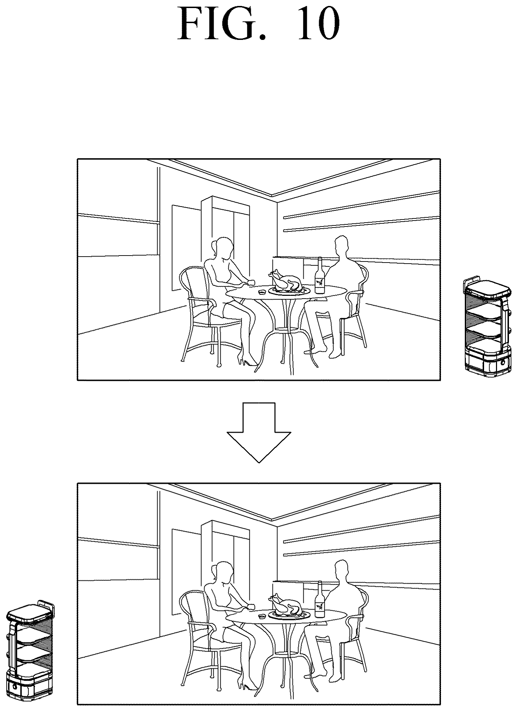

FIGS. 9 and 10 are diagrams provided to explain examples of utilization according to various embodiments.

The electronic apparatus 100 may further include a projection unit, and the processor 130 may control the projection unit to project an image, as shown in the upper side of FIG. 9. In this case, the processor 130 may also identify the user as an object in the same manner as in FIG. 5 and control the driver 120 to change a projection area when the user's position changes, as shown in the lower side of FIG. 9.

Alternatively, the electronic apparatus 100 may be implemented as a serving robot. For example, when the users are eating a meal, the processor 130 may identify a first user of the users as an object in the same manner as in FIG. 5, and perform serving based on the first user, as shown in the upper side of FIG. 10. Subsequently, the processor 130 may identify a second user of the users as an object in the same manner as in FIG. 5, and perform a serving based on the second user, as shown in the lower side of FIG. 10

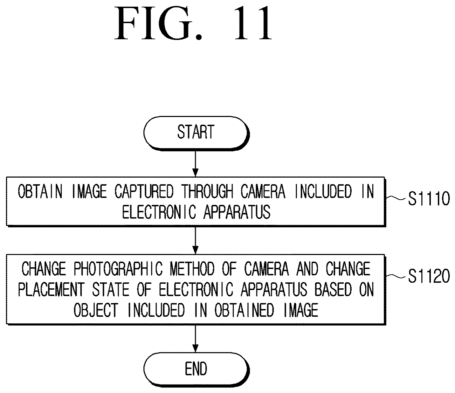

FIG. 11 is a flowchart provided to explain a controlling method of an electronic apparatus according to an embodiment.

Firstly, an image captured by a camera included in the electronic apparatus is obtained (S1110), and based on an object included in the obtained image, the camera's photographic method is changed and the placement state of the electronic apparatus is changed (S1120).

Further, the operation of changing (S1120) may include zooming in or zooming out of the camera, moving the position of the electronic apparatus, or changing the shooting direction of the camera based on the object included in the obtained image.

The operation may further include: obtaining a recaptured image of the electronic apparatus through the camera while the electronic apparatus is being repositioned; and, based on the object included in the recaptured image, adjusting the photographic method of the camera and adjusting the placement state of the electronic apparatus.

Further, the operation of changing (S1120) may include obtaining a target image of a composition corresponding to an object included in the obtained image by inputting the obtained image into the first neural network model, obtaining placement information of the electronic apparatus corresponding to the target image by inputting the obtained image and the target image into the second neural network model, obtaining a plurality of candidate images, each corresponding to a plurality of preliminary placement information based on the placement information, and changing the placement state of the electronic apparatus based on a candidate image corresponding to the target image from among the plurality of candidate images.

The placement information may include information regarding a position of the electronic apparatus and a shooting direction of the camera, and the operation of obtaining the plurality of candidate images may include applying a plurality of predetermined values to the position of the electronic apparatus and the shooting direction of the camera, respectively, to obtain a plurality of preliminary placement information, and remapping the obtained image based on the plurality of preliminary placement information to obtain the plurality of candidate images.

Further, the operation of obtaining the plurality of candidate images may include remapping the obtained image based on the 3D model information for the object and the plurality of preliminary placement information to obtain the plurality of candidate images.

The operation may further comprise: obtaining a recaptured image of the electronic apparatus through the camera while the electronic apparatus is being repositioned; obtaining an updated target image of a composition corresponding to an object included in the recaptured image by inputting the recaptured image into the first neural network model; obtaining updated placement information of the electronic apparatus corresponding to the target image by inputting the recaptured image and the updated target image into the second neural network model; and if the placement state of the electronic apparatus and the updated placement information correspond to each other, stopping the position movement of the electronic apparatus.

The operation may further comprise, after stopping the positional movement of the electronic apparatus, obtaining an image through the camera at predetermined time intervals, and, if an image in which the state of the object has changed is identified in the image obtained at the predetermined time intervals, inputting the identified image into the first neural network model.

In addition, the operation of changing (S1120) may include changing the placement state of the electronic apparatus within a movement range in which the electronic apparatus is capable of moving.

Further, the movement range may include information regarding an area in which the electronic apparatus is capable of moving, which is detected by a sensor included in the electronic apparatus while the electronic apparatus is moved to a random location.

The operation may further include the operation of receiving a user command and changing the placement of the electronic apparatuses based on the user command.

According to one or more embodiments of the present disclosure, the electronic apparatus can perform automatic image photography in an optimal composition in accordance with an object, and user convenience can be improved.

According to an embodiment, the above-described various embodiments may be implemented as software including instructions stored in machine-readable storage media, which can be read by machines (e.g., computers). The machines refer to devices that call instructions stored in a storage medium, and can operate according to the called instructions, and the devices may include an electronic device according to the aforementioned embodiments (e.g., an electronic apparatus (A)). In case an instruction is executed by a processor, the processor may perform a function corresponding to the instruction by itself, or by using other components under its control. An instruction may include a code that is generated or executed by a compiler or an interpreter. The machine-readable storage medium may be provided in a form of a non-transitory storage medium. Here, the term "non-transitory" means that the storage medium is tangible without including a signal, and does not distinguish whether data are semi-permanently or temporarily stored in the storage medium.

In addition, according to an embodiment, the above-described methods according to the various embodiments may be included and provided in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStoreTM). In case of the online distribution, at least a portion of the computer program product may be at least temporarily stored in a storage medium such as a memory of a server of a manufacturer, a server of an application store, or a relay server or be temporarily generated.

In addition, according to an embodiment, the above-described various embodiments are may be implemented in a recording medium that can be read by a computer or a similar device using software, hardware, or a combination thereof. In some cases, embodiments described herein may be implemented by a processor itself. According to software implementation, embodiments such as procedures and functions described in this specification may be implemented as separate software. Each piece of software may perform one or more functions and operations described herein.

Computer instructions for performing processing operations of devices according to the above-described various embodiments may be stored in a non-transitory computer-readable medium. When being executed by a processor of a specific device, the computer instructions stored in such a non-transitory computer-readable medium allows the specific device to perform processing operations in the device according to the above-described various embodiments. The non-transitory computer-readable medium refers to a medium that stores data semi-permanently and can be read by a device, rather than a medium that stores data for a short period of time, such as registers, caches, and memories. Specific examples of the non-transitory computer-readable medium may include CD, DVD, hard disk, Blu-ray disk, USB, memory card, ROM, etc.

The components (for example, modules or programs) according to various embodiments described above may include a single entity or a plurality of entities, and some of the corresponding sub-components described above may be omitted or other sub-components may be further included in the various embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

Example embodiments have been illustrated and described, but the disclosure is not limited to the specific embodiments described above, and can be implemented by those of ordinary skill in the art pertaining to the disclosure without departing from the gist of the claims. Various modifications are possible by the disclosure, of course, and these modifications should not be individually understood from the technical spirit or perspective of the disclosure.

## Claims

1. An electronic apparatus comprising:
a camera;
a driver;
at least one memory storing one or more instructions; and
one or more processors operably connected to the camera, the driver, and the at least one memory,
wherein the one or more instructions, when executed by the one or more processors, cause the electronic apparatus to:
obtain an image captured through the camera; and
based on an object included in the image, control the driver to change a photographic method of the camera and a placement state of the electronic apparatus.

2. The electronic apparatus of claim 1, wherein the one or more instructions, when executed by the one or more processors, further cause the electronic apparatus to, based on the object included in the image:
control the camera to zoom in or zoom out, and
control the driver to perform at least one of changing a position of the electronic apparatus or changing a direction of the camera.

3. The electronic apparatus of claim 1, wherein the one or more instructions, when executed by the one or more processors, further cause the electronic apparatus to:
obtain a recaptured image through the camera while a position of the electronic apparatus is changed; and
based on an object included in the recaptured image, control the driver to adjust the photographic method of the camera and adjust the placement state of the electronic apparatus.

4. The electronic apparatus of claim 1, wherein the at least one memory stores a first neural network model and a second neural network model, and
wherein the one or more instructions, when executed by the one or more processors, further cause the electronic apparatus to:
obtain a target image corresponding to the object included in the image by inputting the image into the first neural network model,
obtain placement information of the electronic apparatus corresponding to the target image by inputting the image and the target image into the second neural network model,
obtain a plurality of candidate images corresponding to each of a plurality of pieces of preliminary placement information based on the placement information, and
control the driver to change the placement state of the electronic apparatus based on a candidate image corresponding to the target image from among the plurality of candidate images.

5. The electronic apparatus of claim 4, wherein the placement information comprises information regarding a position of the electronic apparatus and a direction of the camera, and
wherein the one or more instructions, when executed by the one or more processors, further cause the electronic apparatus to:
obtain the plurality of pieces of preliminary placement information by applying a plurality of predetermined values to each of the position of the electronic apparatus and the direction of the camera, and
obtain the plurality of candidate images by remapping the image based on the plurality of pieces of preliminary placement information.

6. The electronic apparatus of claim 5, wherein the at least one memory stores three-dimensional (3D) model information regarding the object; and
wherein the one or more instructions, when executed by the one or more processors, further cause the electronic apparatus to obtain the plurality of candidate images by remapping the image based on the 3D model information and the plurality of pieces of preliminary placement information.

7. The electronic apparatus of claim 4, wherein the one or more instructions, when executed by the one or more processors, further cause the electronic apparatus to:
obtain a recaptured image through the camera while a position of the electronic apparatus is changed,
obtain an updated target image corresponding to an object included in the recaptured image by inputting the recaptured image into the first neural network model,
obtain updated placement information of the electronic apparatus corresponding to the updated target image by inputting the recaptured image and the updated target image into the second neural network model; and
based on the placement state of the electronic apparatus corresponding to the updated placement information, stop an operation of the driver.

8. The electronic apparatus of claim 7, wherein the one or more instructions, when executed by the one or more processors, further cause the electronic apparatus to:
obtain a plurality of images through the camera at predetermined time intervals after the operation of the driver is stopped, and
based on identifying an image among the plurality of images that includes a changed state of the object, input the identified image into the first neural network model.

9. The electronic apparatus of claim 1, wherein the at least one memory stores information regarding a movement range of the electronic apparatus, and
wherein the one or more instructions, when executed by the one or more processors, further cause the electronic apparatus to control the driver to change the placement state of the electronic apparatus within the movement range.

10. The electronic apparatus of claim 9, further comprising a sensor,
wherein the movement range comprises information regarding an area in which the electronic apparatus is capable of moving, and
wherein the information regarding the area in which the electronic apparatus is capable of moving is based on an output of the sensor while the electronic apparatus is moved to a location.

11. The electronic apparatus as claimed in claim 1, further comprising a user interface,
wherein the one or more instructions, when executed by the one or more processors, further cause the electronic apparatus to control the driver to change the placement state of the electronic apparatus based on a user command received through the user interface.

12. A method of controlling an electronic apparatus, the method comprising:
obtaining an image captured through a camera included in the electronic apparatus; and
based on an object included in the image, changing a photographic method of the camera and a placement state of the electronic apparatus.

13. The method of claim 12, wherein the changing comprises, based on the object included in the image:
causing the camera to zoom in or zoom out; and
performing at least one of changing a position of the electronic apparatus or changing a direction of the camera.

14. The method of claim 12, further comprising:
based on a position of electronic apparatus changing, obtaining a recaptured image through the camera; and
based on an object included in the recaptured image, adjusting the photographic method of the camera and adjusting the placement state of the electronic apparatus.

15. The method of claim 12, wherein the changing comprises:
obtaining a target image corresponding to the object included in the image by inputting the image into a first neural network model;
obtaining placement information of the electronic apparatus corresponding to the target image by inputting the image and the target image into a second neural network model;
obtaining a plurality of candidate images corresponding to each of a plurality of pieces of preliminary placement information based on the placement information; and
changing the placement state of the electronic apparatus based on a candidate image corresponding to the target image from among the plurality of candidate images.
